# EUROPEAN PATENT SPECIFICATION

(11) **EP 0 482 563 B1**
(45) Date of publication and mention of the grant of the patent: **27.09.1995**
(21) Application number: 91117940.6
(22) Date of filing: 21.10.1991
(51) Int. Cl.: B62D 33/04, B62D 65/00

(54) **Modular vehicle**
Modulares Fahrzeug
Véhicule modulaire

(30) Priority: 23.10.1990 IT 6781790
(43) Date of publication of application: 29.04.1992
(73) Proprietor: FIAT AUTO S.p.A., 10135 Torino (IT)
(72) Inventor: Bangle, Christopher Edward, I-10027 Testona (IT)
(74) Representative: Jorio, Paolo, Dr. Ing.

(56) References cited:
- BE-A- 853 064
- DE-U- 8 617 229
- FR-A- 1 442 775
- FR-A- 2 445 259
- GB-A- 712 917
- US-A- 3 188 131

## Description

The present invention relates to a modular vehicle provided with the features of the preamble of claims 1 and 10, the body of which can be made using a minimum of pressed parts. In particular, the invention relates to a van for light transport within city limits, or delivery van, which is simple and economical to produce.

It is known that vans for light transport within city limits or at any rate for short journeys, or delivery vans, are generally derived from mass-produced cars, preferably utilitarian or of medium capacity, the body of which is modified without altering the floor, nose or front part of the interior, and the rear part of the interior and the boot is replaced by a load carrying area in the form of a parallelepiped defined by a structure of sheet metal panels joined to each other, to the floor and to the front part of the body.

This method of producing a van involves some inconveniences: designing and producing the junction between the load carrying area and the part of the body which remains the same as that of the original vehicle can present difficulties; the load capacity is limited in relation with the external dimensions of the van; it is difficult to ensure easy and convenient access to the load carrying area, which is generally limited to a rear door; and the production of the van as a whole is relatively costly.

An aim of the invention is to provide a vehicle, in particular a delivery van which is easy and economical to produce, has a load capacity proportionate to the external dimensions and permits easy access to the load carrying area.

The above aim is achieved by the invention as defined in claims 1 and 10.

For a better understanding of the invention, a non-limitative description is now given of one embodiment thereof, with reference to the appended drawings, in which:
figure 1 illustrates diagramatically, in perspective and in an exploded view, a vehicle produced in accordance with the invention;
figure 2 illustrates diagramatically on an enlarged scale a detail in perspective of the rear part of the vehicle of figure 1;
figure 3 illustrates in perspective a partly cut-away view on an enlarged scale of a modular panel with which the vehicle is produced according to the invention; and
figures 4,5,6 illustrate in section and in perspective, diagramatically, some constructional details of the vehicle of figure 1.

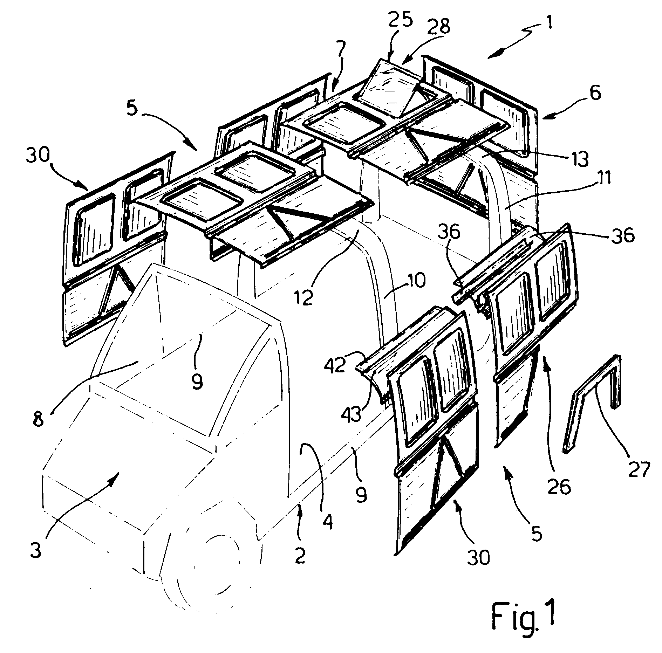

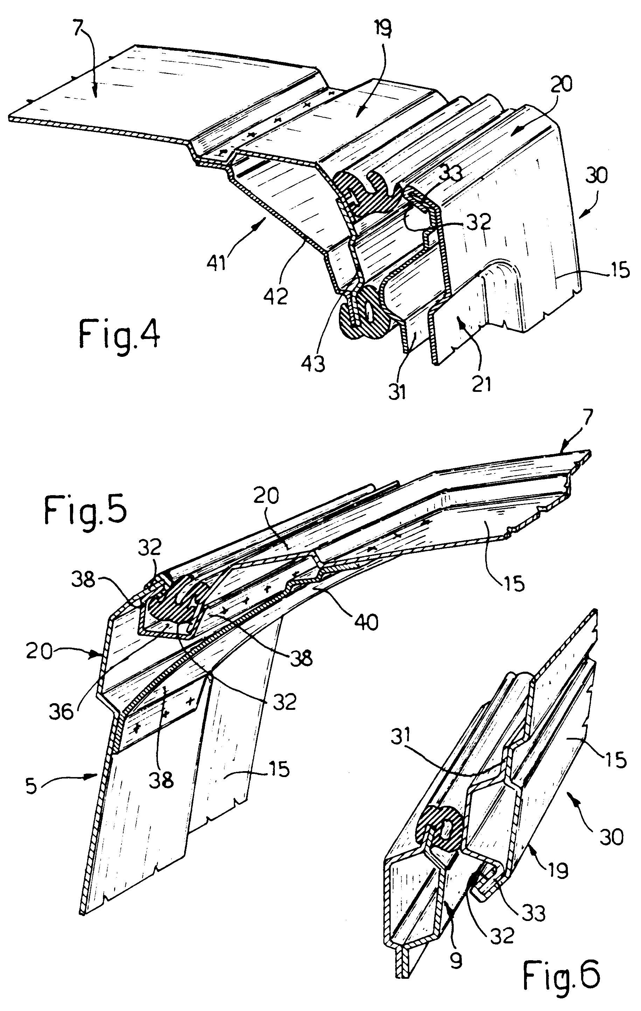

With reference to figures 1 to 6, indicated as a whole by 1 is a modular vehicle that can be produced economically, in the present case a van suitable for use as a delivery vehicle. The van is provided with known equipment and engine, not illustrated for simplicity, but has a body 2 of novel structure: in particular the body 2 comprises a front part 3 defining the nose of the vehicle, a floor 4, two sides 5 symmetrical with each other, a rear wall 6 and a roof 7. The front part or nose 3 is produced in a traditional manner. It houses the engine and front axle of the vehicle and supports a windscreen 8. The floor 4 is also produced in a traditional manner and is delimited along the sides 5 (figure 6) by respective box-type sills 9. The floor 4 further supports integrally, in correspondence with each side 5, a central pillar 10 and a rear pillar 11, which are attached to the pillars of the other side 5 by respective cross members 12 and 13.

According to the invention, each side 5 is delimited externally by two sheet metal panels 15 identical to each other, a further sheet metal panel 15 identical to those of sides 5 delimits externally the rear wall, and preferably the roof 11 is also delimited on the exterior by sheet metal panels 15 identical to those of sides 5, in such a manner that the vehicle 1, from the line of the front part 3 to the rear wall 6, is volumetrically defined substantially by two adjacent cubes, the sides of which are dimensionally defined by panels 15. Obviously, to produce such a structure, the floor 4 is dimensioned appropriately to provide a width substantially equal to approximately half the length, or to provide a length equal to twice the width of each panel 15 and a width equal to that of the latter, plus an additional amount to take account of the dimensions of pillars 10,11. From what has been stated, it follows that the height of the vehicle 1 measured from the roof to the floor 4 is also substantially equal to the height of panels 15. According to a possible variant not ilustrated for simplicity, the roof 7 can also be produced from a single self-supporting element pressed from a synthetic plastic material by known methods; in that case these elements are attached to side panels 15 in a manner providing structural continuity.

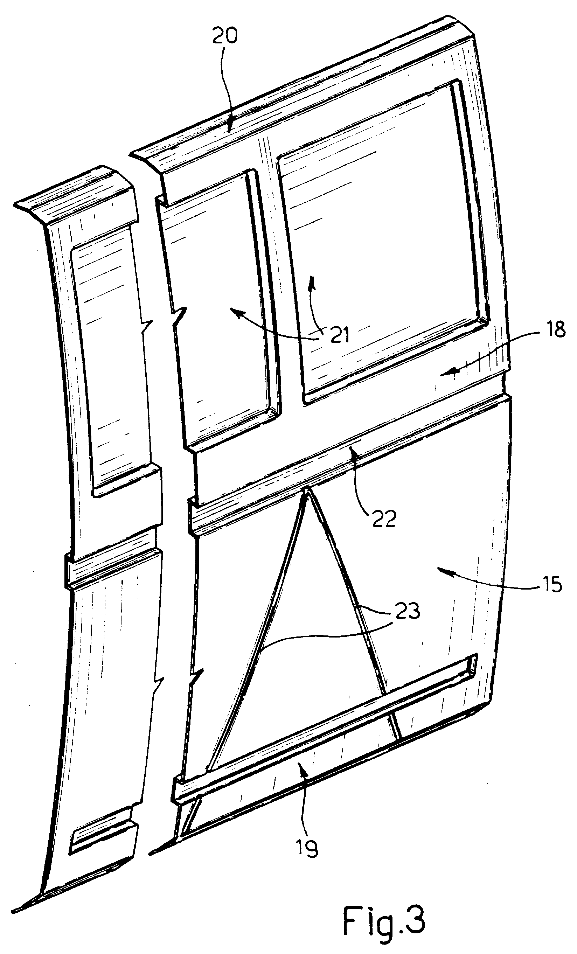

With particular reference to figure 3, each panel 15 comprises an asymmetrically pressed central portion 18 and two opposite end portions 19, 20 defining respective transversal edges of panel 15, moulded so that they are strictly symmetrical with each other. Panels 15 are further shaped so that they curve outwards from the vehicle 1 transversally to opposite end portions 19,20 or in the direction of the height of the vehicle 1 (for panels 15 forming the sides 5 and rear wall 6) or of the width thereof (for panels 15 comprising the roof 7). The asymmetrically pressed central portion 18 comprises two rectangular depressions 21 obtained side by side in a position adjacent to the upper end portion 20, a transversal rib 22 having the concavity turned towards the exterior of the vehicle 1 and obtained parallel to end portions 19,20 along the full width of the panel 15, and two oblique ribs 23 diverging from each other and running from the transversal rib 22 to the lower end portion 19. Some (or all) of the panels 15 comprising the vehicle are cut in correspondence with the depressions 21 and/or oblique ribs 23; in particular, by cutting out the recessed wall of the depressions 21 windows are obtained therein, which can then be fitted with fixed panes 25 or descending or hinged panes, all of well known assemblage and therefore not illustrated for simplicity. In this manner, by action to a greater or lesser degree on the depressions in the panels comprising the sides 5 and the rear wall 6, a van 1 can be obtained which is totally enclosed, partially fitted with windows or fitted with windows throughout. The same action in respect of the panels 15 comprising the roof 7 can provide, in correspondence with each depression 21, a respective sunshine roof 28, for example hinged (illustrated diagramatically in figure 1), which permits the interior of the van to be ventilated. By designing panels 15 in the appropriate form, the sunshine roof apertures or window spaces (if glazed 25 they are fixed) can be placed along the whole length on the same side 5, or alternatively in pairs along both sides (it is sufficient to mount the two panels 15 of the roof 7 rotated in 180° with respect to each other, which is made possible by the symmetry of end portions 19,20). By cutting panels 15 comprising the rear part of the sides 5, these panels being mounted in a fixed position so as to define respective side walls of the vehicle 1, one can instead obtain therein respective wheel openings 26 (only one of which is illustrated in figure 1), which can then be completed with a wheel housing made from a plastic material 27. For this purpose it is sufficient to cut along rib 23 (figure 1) which therefore acts as a cutting jig.

With particular reference to figures 4,5,6, panels 15 of each side 5 positioned in proximity to the nose 3 are mounted in such a manner as to define two opposite sliding doors 30 of the vehicle 1. For this purpose each panel 15 is coupled internally to a known frame 31 (figures 4 and 6) produced in a traditional manner by bending a corresponding respective edge 32 of each symmetrical end portion 19,20 of the said panel back over a corresponding transversal edge 33 of the frame 31, and is mounted offset towards the exterior of the vehicle with respect to a said corresponding second panel 15 of the same side 5 mounted fixed and provided with a wheel space 26. The sliding doors 30 are guided in a known manner not illustrated for simplicity along the respective transversal ribs of fixed panels 15 (the rear panels provided with wheel spaces 26 of each side 5), which, for example, receive in a known manner the known guide, not illustrated for simplicity.

The said rear panels 15 of each side 5, or those adjacent to wall 6, are each (figure 5) attached by welding to a corresponding end portion 19,20 of a corresponding panel 15 of the roof 7. In figure 5 this attachment is illustrated only by an upper left hand lateral portion of the vehicle 1, the end portions 19,20 of panels 15 being symmetrical. In particular, the attachment is obtained by means of a first U-channel element 36, which is attached by spot welds (illustrated as crosses) along its flanks to the same edges 32 of portions 19,20 that are used to attach panels 15 for use as doors 30 to the frame 31. In the example illustrated, element 36 is joined at respective flanks 38 to two respective adjacent edges 32 of two respective corresponding symmetrical end portions 20 adjacent respectively to fixed panel 15 of side 5 and to the corresponding panel 15 of the roof 7. The attachment is further completed by a second element 38 placed in a position underneath the channel element 36, in such a manner that the junction of panels 15 and elements 36,38 defines along each side 5 a respective first section 40 of a box-type longitudinal member.

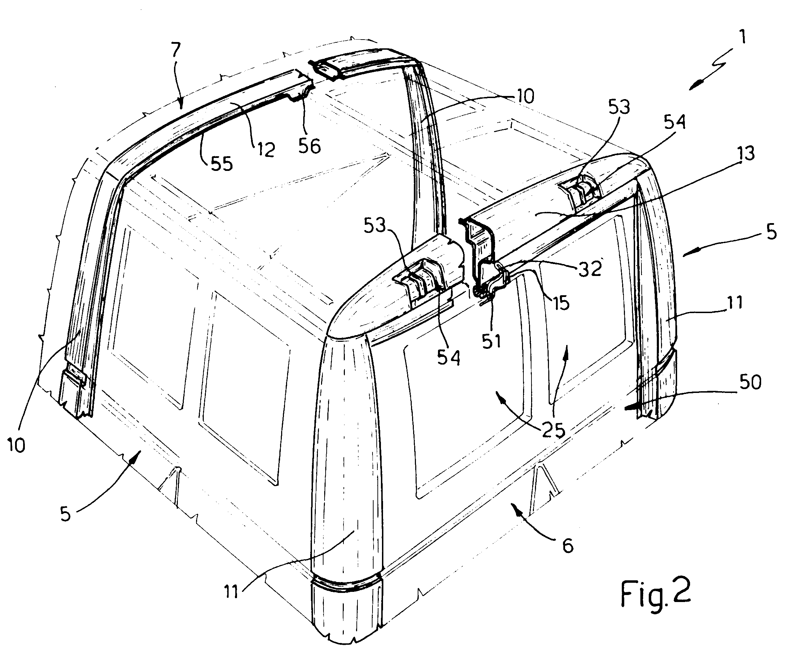

Similarly, at the part of each side 5 occupied by the door 30, a second section 41 of a box-type longitudinal member is defined in correspondence with panels 15 and along the side 5 (figure 4) by a corresponding panel 15 of roof 7 having one of its symmetrical portions 19,20 (in the example illustrated a portion 19) and two respective elements 42,43 Y-welded together and welded to panel 15 of roof 7 in correspondence with portion 19 (20 for the side 5 opposite to the one illustrated). These longitudinal sections 40,41 of each side 5, panels 15 all being equal, are aligned with each other coaxially and are attached in a traditional manner, known but not illustrated for simplicity, to pillars 10,11 and respective cross members 12,13, which are all defined by traditional box-type elements. Pillar 11 and cross member 13 (figure 2) are in particular realised as symmetrical double curvature members capable of joining fixed rear panels 15 of the sides 5 and the corresponding panel 15 of the roof 7 to panel 15 defining the rear wall 6 of the vehicle, which, being positioned transversally with respect to the other panels 15, has precisely the same perpendicularly orientated curvature or camber as the corresponding rear end panel 15 of the roof 7.

Preferably, this panel 15 defining the rear wall 6 of the vehicle is bascule hinged in a known manner, and illustrated therefore only diagramatically, on rear cross member 13 and is attached internally, in a manner fully analogous to that illustrated in figure 4,6, to a known internal frame 51 of the type at 31, in such a manner as to define a rear door 50 of the vehicle. For example, the door 50 is attached by means of two known hinges 53 housed in respective spaces 54 of cross member 13. Panels 15 of roof 7 (figure 2) are inserted during assembly of the body 2 between the cross members 12,13 and the front part 3, supported by and welded to respective matching edges 55 thereof (only one of which is illustrated in figure 2), moulded to match the cambered profile of panels 15 and, in the present example, provided with a recess 56 to receive the ends of the ribs 22. At the bottom, the structure of the body 2 provides, in correspondence with door 30, said longitudinal sill members 9 and, in correspondence with fixed rear panels 15 of the sides 5, longitudinal sections, not illustrated for simplicity, being continuations of longitudinal sill members 9 and which are obtained, similarly to upper longitudinal frame members 40, by welding appropriate channel elements to the lower portions 19 of the said panels 15.

From what has been described, the advantages connected with the invention are evident. The vehicle 1, using largely the same panel for most of the body, as well as pillars and symmetrical parts, can also be produced in small or medium quantities at reduced cost. The production thereof is facilitated by the fact that there are few components and all are standardised. At the same time, by using a system of modular panels, one obtains upon assembly a self-supporting monocoque vehicle as well as a vehicle comprising a frame to which body panels are fixed: this enables the panels 15 to be used as load-bearing elements of the body and not simply as covering elements, thus providing a notable reduction in weight and, consequently, the production of a vehicle with reduced consumption.

## Claims

1. A modular vehicle (1), in particular a van, the body of which comprises a forward part (3) defining the nose of the vehicle, a floor (4), two sides (5), a rear wall (6) and a roof (7), wherein each side (5) and the rear wall (6) are delimited externally by a number of identical sheet metal panels (15); **characterized** in that each side (5) is delimited by two said sheet metal panels (15), and in that a single further sheet metal panel (15), identical to those of the said sides, delimits externally the rear wall (6); the said roof (7) also being delimited externally by two sheet metal panels (15) identical to those of the sides (5); the dimensions of said sheet metal panels (15) being such that the vehicle (1), from the front part (3) to the rear wall (6), is volumetrically defined substantially by two adjacent cubes, the sides of which are dimensionally defined by said identical panels (15).

2. A modular vehicle (1) according to claim 1, characterised by the fact that each of said identical sheet metal panels (15) comprises an assymetrically pressed central portion (18) and two opposite end portions (19,20), defining respective transversal edges of the panel (15), moulded strictly in a symmetrical manner, the panel (15) being cambered towards the exterior of the vehicle transversally to said opposite end portions (19,20).

3. A vehicle (1) according to claim 2, characterised by the fact that said assymetrically pressed central portion (18) comprises two rectangular depressions (21) obtained side by side in a position adjacent to the first of said end portions (20), a transversal rib (22) having the concavity turned towards the exterior of the vehicle and obtained parallel to said end portions (19,20) along the whole width of the panel (15), and two oblique ribs (23) diverging from each other and running from the said transversal rib (22) towards a second said symmetrical end portion (19); at least some of said panels (15) comprising the vehicle being cut in correspondence with said depressions (21) and/or said oblique ribs (23) to obtain therein respective window openings and/or respective wheel spaces (26).

4. A vehicle (1) according to claim 3, characterised by the fact that a first panel (15) of each of said sides (5) is attached internally to a frame (31) by folding a corresponding edge (32) of each of said symmetrical end portions (19,20) of the panel back over a corresponding transversal edge (33) of the frame (31), and is mounted offset towards the exterior of the vehicle (1) with respect to a corresponding second panel (15) of the said side (5), in such a manner as to define with the frame (31) a respective door (30) of the vehicle, which door (30) is slidingly guided along the said transversal rib (22) of the second panel (15).

5. A vehicle (1) according to claim 4, characterised by the fact that said second panel (15) of each side (5) is attached by being welded to a corresponding end portion (19,20) of a corresponding panel (15) of the roof (7) by means of a first U-channel element (36) welded along the said sides (5) to respective adjacent edges (32) of respective adjacent symmetrical end portions (20) of the side panel (15) and of the roof panel (15), and by means of a second element (38) placed in a position beneath the channel element (36), in such a manner that the junction of the panels (15) defines along ach side (5) a respective first section (40) of a box-type longitudinal member.

6. A vehicle (1) according to claim 5, characterised by the fact that a second section (41) of the box-type longitudinal member is defined in correspondence with said first panels of the side (5) and along each flank by a corresponding panel (15) of the roof (7) and by two respective elements (42,43) Y-welded together and welded to the roof panel (15) in correspondence with a respective symmetrical end portion (19;20) thereof.

7. A vehicle (1) according to claim 5 or 6, characterised by the fact that the said body comprises along each side (5) a corresponding central pillar (10) and a corresponding visible rear pillar (11), which are attached to corresponding pillars (10,11) of the other side (5) by means of a respective central cross member (12) and a respective rear cross member (13); the rear pillars (11) and the rear cross member (13) being defined by double curvature box-type elements symmetrical with each other and capable of attaching the second panels (15) of the sides (5) and the corresponding roof panel (15) to the panel (15) defining the rear wall (6) of the vehicle (1).

8. A vehicle (1) according to claim 7, characterised by the fact that said panel (15) defining the rear wall (6) of the vehicle is bascule hinged to the said rear cross member (13), in such a manner as to define a rear door (50) of the vehicle (1).

9. A vehicle (1) according to claim 7 or 8, characterised by the fact that said panels (15) of the roof (7) are inserted between said cross members (12,13), being supported by and welded against respective matching edges (55) thereof moulded to the same shape as the panels (15) in the direction of the camber thereof.

10. A modular vehicle (1), in particular a van, a body of which comprises a front part (3) defining the nose of the vehicle (1), a floor (4), two sides (5), a rear wall (6) and a roof (7), and wherein said sides (5) and rear wall (6) are delimited externally by identical sheet metal panels (15); **characterized** by the fact that each side (5) is delimited by two of said sheet metal panes (15), while a single one of said sheet metal panels (15) delimits externally the rear wall (6); and by the fact that, in combination, said roof (7) is formed by a single self-supporting pressed element of a synthetic plastic material attached to said side panels (15).

## Patentansprüche

1. Modulares Fahrzeug (1), insbesondere ein Kastenwagen, wobei die Karosserie davon einen vorderen Teil (3), der die Nase des Fahrzeugs festlegt, einen Boden (4), zwei Seiten (5), eine hintere Wand (6) und ein Dach (7), wobei jede Seite (5) und die hintere Wand (6) nach außen durch eine Anzahl identischer Metallplattentafeln (15) begrenzt ist, aufweist, dadurch gekennzeichnet, daß jede Seite (5) durch zwei Metallplattentafeln (15) begrenzt ist und daß eine einzelne, weitere Metallplattentafel (15), die identisch zu derjenigen der Seiten ist, nach außen die hintere Wand (6) begrenzt; daß das Dach (7) auch nach außen durch zwei Metallplattentafeln (15) begrenzt ist, die identisch zu denjenigen der Seiten (5) sind; daß die Dimensionen der Metallplattentafeln (15) derart sind, daß das Fahrzeug (1) von dem vorderen Teil (3) zu der hinteren Wand (6) hin volumenmäßig im wesentlichen durch zwei aneinandergrenzende Würfel festgelegt ist, wobei die Seiten davon dimensionsmäßig durch die identischen Tafeln (15) festgelegt sind.

2. Modulares Fahrzeug nach Anspruch 1, dadurch gekennzeichnet, daß jede der identischen Metallplattentafeln (15) einen asymmetrisch eingepreßten zentralen Bereich (18) und zwei gegenüberliegende Endbereiche (19, 20) aufweist, die jeweilige transversale Kanten der Tafeln (15) festlegen, die exakt in einer symmetrischen Art und Weise geformt sind, wobei die Tafeln (15) zu dem Innenraum des Fahrzeugs transversal zu den gegenüberliegenden Endbereichen (19, 20) gewölbt sind.

3. Fahrzeug (1) nach Anspruch 2, dadurch gekennzeichnet, daß der asymmetrisch gepreßte zentrale Bereich (18) in zwei rechtwinklige Vertiefungen (21), die Seite an Seite in einer Position angrenzend an den ersten der Endbereiche (20) erhalten werden, eine transversale Rippe (22), die eine konkave Form besitzt, die zu der Außenseite des Fahrzeugs gedreht ist und parallel zu den Endbereichen (19, 20) entlang der gesamten Breite der Tafeln (15) gehalten ist, und zwei schräge Rippen (23), die zueinander divergieren und von der transversalen Rippe (22) zu einem zweiten des symmetrischen Endbereichs (19) hin verlaufen, aufweist; wobei mindestens einige der Tafeln (15), die das Fahrzeug aufweist, entsprechend den Vertiefungen (21) und/oder den schrägen Rippen (23) geschnitten sind, um darin entsprechende Fensteröffnungen und/oder Radräume (26) zu erhalten.

4. Fahrzeug (1) nach Anspruch 3, dadurch gekennzeichnet, daß eine erste Tafel (15) jeder der Seiten (5) innen an einem Rahmen (31) durch Falten einer entsprechenden Kante (32) jedes der symmetrischen Endbereiche (19, 20) der Tafeln nach hinten über eine entsprechende transversale Kante (33) des Rahmens (31) befestigt ist und versetzt zu der Außenseite des Fahrzeugs (1) hinsichtlich einer entsprechenden zweiten Tafel (15) der Seite (5) derart befestigt ist, um mit dem Rahmen (31) eine jeweilige Tür (30) des Fahrzeugs festzulegen, wobei die Tür (30) gleitend entlang der transversalen Rippe (22) der zweiten Tafel (15) geführt wird.

5. Fahrzeug (1) nach Anspruch 4, dadurch gekennzeichnet, daß die zweite Tafel (15) jeder der Seiten (5) dadurch befestigt ist, daß sie an einem entsprechenden Endbereich (19, 20) einer entsprechenden Tafel (15) des Dachs (7) mittels eines ersten U-förmigen Kanalelements (36), das entlang der Seite (5) der jeweiligen, benachbarten Kanten (32) jeweiliger angrenzender symmetrischer Endbereiche (20) der Seitentafel (15) und der Dachtafel (15) angeschweißt ist, und mittels eines zweiten Elements (38), das in einer Position unterhalb des Kanalelements (36) derart plaziert ist, daß die Verbindung der Tafeln (15) entlang jeder Seite (5) einen jeweiligen ersten Abschnitt (40) eines kastenförmigen Längsteils festlegt, befestigt ist.

6. Fahrzeug (1) nach Anspruch 5, dadurch gekennzeichnet, daß ein zweiter Abschnitt (41) eines kastenförmigen Längsteils in Übereinstimmung mit den ersten Tafeln der Seite (5) und entlang jeder Flanke durch eine entsprechende Tafel (15) des Dachs (7) und durch zwei jeweilige Elemente (42, 43), die Y-förmig miteinander verschweißt und an der Dachtafel (15) entsprechend einem jeweiligen symmetrischen Endbereich (19, 20) davon verschweißt sind, festgelegt ist.

7. Fahrzeug (1) nach Anspruch 5 oder 6, dadurch gekennzeichnet, daß die Karosserie entlang jeder Seite (5) eine entsprechende zentrale Stütze (10) und eine entsprechende, sichtbare hintere Stütze (11), die an entsprechenden Stützen (10, 11) der anderen Seite (5) mittels eines jeweiligen zentralen Querteils (12) und eines jeweiligen hinteren Querteils (13) befestigt sind, aufweist; wobei die hinteren Stützen (11) und das hintere Querteil (13) durch doppelt gekrümmte kastenförmige Elemente symmetrisch zueinander definiert und für eine Befestigung der zweiten Tafeln (15) der Seite (5) und der entsprechenden Dachtafel (15) an der Tafel (15), die die hintere Wand (6) des Fahrzeugs (1) festlegt, geeignet sind.

8. Fahrzeug (1) nach Anspruch 7, dadurch gekennzeichnet, daß die Tafel (15), die die hintere Wand (6) des Fahrzeugs festlegt, mittels einer Drehriegelverbindung gelenkig an dem hinteren Querteil (13) in einer Art und Weise verbunden ist, um eine hintere Tür (50) des Fahrzeugs (1) festzulegen.

9. Fahrzeug (1) nach Anspruch 7 oder 8, dadurch gekennzeichnet, daß die Tafeln (15) des Dachs (7) zwischen den Querteilen (12, 13) eingesetzt sind, die durch jeweilige passende Kanten (55) davon getragen und dagegen angeschweißt sind, die in derselben Form wie die Tafeln (15) in der Richtung der Wölbung davon geformt sind.

10. Modulares Fahrzeug (1), insbesondere ein Kastenwagen, wobei eine Karosserie davon einen vorderen Teil (3), der die Nase des Fahrzeugs (1) festlegt, einen Boden (4), zwei Seiten (5), eine hintere Wand (6) und ein Dach (7) aufweist, und wobei die Seiten (5) und die hintere Wand (6) nach außen durch identische Metallplattentafeln (15) begrenzt sind; dadurch gekennzeichnet, daß jede Seite (5) durch zwei der Metallplattentafeln (15) begrenzt ist, während eine einzelne der Metallplattentafeln (15) nach außen zu der hinteren Wand (6) begrenzt ist, und daß in Kombination das Dach (7) durch ein einzelnes, selbsttragendes, gepreßtes Element aus einem synthetischen Plastwerkstoff, das an den Seitentafeln (15) befestigt ist, gebildet ist.

## Revendications

1. Véhicule modulaire (1), en particulier une camionnette de livraison, dont la carrosserie comprend une partie avant (3) définissant le nez du véhicule, un plateau (4), deux côtés (5) , une paroi arrière (6) et un toit (7), dans lequel chaque côté (5) et la paroi arrière (6) sont délimités extérieurement par une pluralité de panneaux entôle identiques (15), caractérisé en ce que chaque côté (5) est délimité par deuxdits panneaux en tôle (15), et en ce qu'un seul autre panneau en tôle (15), identique à ceux desdits côtés, délimite extérieurement la paroi arrière (6), ledit toit (7) étant également délimité extérieurement par deux panneaux en tôle (15) identiques à ceux des côtés (5), les dimensions desdits panneaux en tôle (15) étant telles que le véhicule (11), entre la partie avant (3) et la paroi arrière (6), est volumétriquement défini sensiblement par deux cubes adjacents dont les faces sont dimensionnellement définies par lesdits panneaux identiques (15).

2. Véhicule modulaire (1) suivant la revendication 1, caractérisé en ce que chacun desdits panneaux en tôle identiques (15) comprend une partie centrale asymétriquement emboutie (18) et deux parties d'extrémité opposées (19,20), définissant des bords transversaux respectifs du panneau (15), formées strictement d'une manière symétrique, le panneau (15) étant cambré vers l'extérieur du véhicule transversalement aux dites parties d'extrémité opposées (19,20).

3. Véhicule (1) suivant la revendication 2, caractérisé en ce que ladite partie centrale asymétriquement emboutie (18) comprend deux enfoncements rectangulaires (21) formés côte à côte dans une position adjacente à la première desdites parties d'extrémité (20), une nervure transversale (22) dont la concavité est tournée vers l'extérieur du véhicule et qui est parallèle auxdites parties d'extrémité (19,20) sur toute la largeur du panneau (15) , et deux nervures obliques (23) qui divergent l'une par rapport à l'autre et s'étendent à partir de ladite nervure transversale (22) vers une deuxième dite partie d'extrémité svmétrique (19), au moins certains desdits panneaux (15) constituant le véhicule étant découpés en correspondance desdits enfoncements (21) et/ou desdites nervures obliques (23) afin de créer dans ces panneaux des ouvertures de fenêtre respectives et/ou des passages de roue respectifs (26).

4. Véhicule (1) suivant la revendication 3, caractérisé en ce qu'un premier panneau (15) de chacun desdits côtés (5) est fixé intérieurement à une ossature (31) par pliage d'un bord correspondant (32) de chacune desdites parties d'extrémité symétriques (19,20) du panneau de façon à rabattre ce bord sur un bord transversal correspondant (33) de l'ossature (31), ledit panneau étant décalé vers l'extérieur du véhicule (1) par rapport à un deuxième panneau correspondant (15) dudit côté (5), de manière à définir avec l'ossature (31) une porte respective (30) du véhicule, cette porte (30) étant guidée de façon coulissante le long de ladite nervure transversale (22) du deuxième panneau (15).

5. Véhicule (1) suivant la revendication 4, caractérisé en ce que ledit deuxième panneau (15) de chaque côté (5) est fixé par soudage à une partie d'extrémité correspondante (19,20) d'un panneau correspondant (15) du toit (7) par l'intermédiaire d'un premier élément à profil en U (36) soudé le long desdits côtés (5) aux bords adjacents respectifs (32) des parties d'extrémité symétriques adjacentes respectives (20) du panneau de côté (15) et du panneau de toit (15), et par l'intermédiaire d'un deuxième élément (38) placé dans une position au-dessous de l'élément à profil en U (36), d'une manière telle que la jonction des panneaux (15) définit le long de chaque côté (5) une première partie respective (40) d'un élément longitudinal en caisson.

6. Véhicule (1) suivant la revendication 5, caractérisé en ce qu'une deuxième partie (41) de l'élément longitudinal en caisson est définie en correspondance avec ledit premier panneau du côté (5) et le long de chaque bord par un panneau correspondant (15) du toit (7) et par deux éléments respectifs (42,43) soudés l'un à l'autre en forme de Y et soudés au panneau de toît (15) en correspondance avec une partie d'extrémité symétrique respective (19;20) de celui-ci.

7. Véhicule (1) suivant la revendication 5 ou 6, caractérisé en ce que l'ossature comprend, le long de chaque côté (5), un montant central correspondant (10) et un montant arrière visible correspondant (11) qui sont reliés à des montants correspondants (10,11) de l'autre côté (5) par une traverse centrale respective (12) et une traverse arrière respective(13), les montants arrière (11) et la traverse arrière (13) étant définis par des éléments en caisson à double courbure mutuellement symétriques et prévus pour fixer les deuxièmes panneaux (15) des côtés (5) et le panneau de toit correspondant (15) au panneau (15) définissant la paroi arrière (6) du véhicule (1).

8. Véhicule (1) suivant la revendication 7, caractérisé en ce que ledit panneau (15) définissant la paroi arrière (6) du véhicule est relié de façon pivotante à ladite traverse arrière (13), de manière à définir une porte arrière (50) du véhicule (1).

9. Véhicule (1) suivant la revendication 7 ou 8, caractérisé en ce que lesdits panneaux (15) du toit (7) sont insérés entre lesdites traverses (12,13) et sont supportés par des bords concordants respectifs (55) des traverses et soudés à ces bords qui sont profilés à la même forme que les panneaux (15) dans la direction de leur cambrure.

10. Véhicule modulaire (1), en particulier une camionnette, dont la carrosserie comprend une partie avant (3) définissant le nez du véhicule (1), un plateau (4), deux côtés (5), une paroi arrière (6) et un toit (7), et dans lequel lesdits côtés (5) et ladite paroi arrière (6) sont délimités extérieurement par des panneaux en tôle identiques (15), caractérisé en ce que chaque côté (5) est délimité par deux desdits panneaux en tôle (15), tandis qu'un seul desdits panneaux en tôle (15) délimite extérieurement la paroi arrière (6), et en ce que, en combinaison, ledit toit (7) est constitué par un élément embouti auto-porteur unique en matière plastique synthétique fixé auxdits panneaux de côté (15).
